(19) Europäisches Patentamt
European Patent Office
Office européen des brevets

(11) EP 3 095 639 A1

(12) EUROPEAN PATENT APPLICATION

(43) Date of publication:
23.11.2016 Bulletin 2016/47

(51) Int Cl.:
B60P 7/08 (2006.01)     B65D 63/18 (2006.01)
F16L 3/233 (2006.01)    B65D 71/04 (2006.01)
B66C 1/12 (2006.01)

(21) Application number: 15168047.7

(22) Date of filing: 18.05.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: S.I.A.T. SOCIETA' INTERNAZIONALE
APPLICAZIONI
TECNICHE S.p.A.
22078 Turate CO (IT)

(72) Inventors:
• Tchavdarov, Ludmil
20813 Bovisio Masciago (IT)
• Izzo, Nicola
20026 Novate Milanese (IT)
• Testa, Dario
27029 Vigevano (IT)

(74) Representative: Faggioni, Carlo Maria
Fumero S.r.l.
Pettenkoferstrasse 20/22
80336 München (DE)

(54) **ADAPTER DEVICE FOR PACKAGING A BODY WITH A NON-LINEAR OUTER SURFACE AND ARRANGEMENT COMPRISING THE ADAPTER DEVICE AND A PACKAGING STRAP**

(57) Adapter device (1) arranged for packaging a body (31) with a non-linear outer surface comprising a spacer section (2) with a body contact surface (3) arranged for contacting the body. Further, the adapter device comprises a first strap support section (4) connected with a first end of the spacer section and arranged for supporting a packaging strap. Also, the adapter device comprises a second strap support section (5) connected with the second end of the spacer section and arranged for supporting the packaging strap. The spacer section is deformable such that the body contact surface can adapt to the body's non-linear outer surface.

FIG. 4

EP 3 095 639 A1

## Description

BACKGROUND OF THE INVENTION

The invention refers to an adapter device for packaging a body with a non-linear outer surface and an arrangement comprising the adapter device and a packaging strap. The invention is described with respect to the packaging of a coil of plastic film and to the packaging of a bundle of pipes. The invention may be advantageously used also when packaging other bodies with a non-linear or curved outer surface.

It is known that a body particularly comprising several components is packaged for storage, for transport or for easier handling. Often, packaging of such bodies is performed by arranging a strap around the body in a tight loop. Sometimes the strap also ties the body to a pallet in particular for transport. To close the loop after tensioning the strap, a first section of the strap may be connected to another section of the same strap or a seal serves to press two sections of the strap against each other. The closing of the loop can be performed by a strapping tool. It has been observed that the tension within the strap can be insufficient after closing the loop or can decrease during transport which may pose a safety problem, in particular when the body comprises several components.

SUMMARY

It is an object of the present invention to improve the safety of a packaged body.

The above object is achieved by the adapter device of claim 1 and preferred embodiments are subject matter of dependent claims. An arrangement comprising the adapter device according to the invention or a preferred embodiment forms the subject matter of claim 10.

According to a first aspect of the invention, the adapter device is arranged for packaging a body with a non-linear outer surface and the adapter device comprises a spacer section with a body contact surface arranged for contacting the body. Further, the adapter device comprises a first strap support section connected with a first end of the spacer section and arranged for supporting a packaging strap. Also, the adapter device comprises a second strap support section connected with the second end of the spacer section and arranged for supporting the packaging strap. The spacer section is deformable such that the body contact surface can adapt, preferably nestle, to the body's non-linear outer surface.

Since the packaging strap can be spaced apart from the spacer section by the first and the second strap support sections, a strapping tool can conveniently be arranged between the first and the second strap support sections. The strapping tool can then be used to close the loop, particularly by first tensioning the strap, later to connect a first section of the strap to another section of the same strap or to operate a seal pressing two sections of the strap against each other. Usually, a component of the strapping tool needs to be arranged between the body and the strap to close the loop. The tensioned packaging strap can impose forces on the first and second strap support sections, which can act to deform the spacer section such that and can act to adapt, preferably nestle, the body contact surface to the non-linear outer surface of the body. Sufficient forces provided, the body contact surface can nestle against the body's outer surface. After closing the loop, the strap may advantageously be arranged spaced apart from the spacer section and the component of the strapping tool mentioned above can be removed from between the body and the strap without reducing the strap's mechanical tension.

It has been observed that the particularly plate shaped component and the non-linear outer surface of the body can act such that the removal of the plate shaped component from under the tensioned strap or loop reduces the strap's tension and the body or at least one of its components may come loose leading to a safety problem. Due to the clearance between the spacer section and the strap particularly in the deformed state of the spacer section, the component of the strapping tool can be removed from under the tensioned strap without its tension being reduced. The tension maintained in the strap may serve to prevent the effect of mechanical vibrations leading to a further decrease of the strap's tension.

The adapter device may offer the advantage that the strap can be conveniently cut or sheared by inserting a blade between the spacer section and the strap.

Within the sense of the invention, the non-linear outer surface of the body to be packaged also includes an at least sectionally curved outer surface of constant or variable radius of curvature. The body to be packaged may extend a longitudinal axis Q.

Within the sense of the invention, a strap supporting state of the adapter device differs from an initial state by a preferably elastic deformation of its spacer section. During the transfer from the initial state to the strap supporting state, the longitudinal axis A may be tilted towards a more radial direction with respect to the non-linear outer surface of the body or its longitudinal axis Q. While the body contact surface of the adapter device can be rather flat in the initial state, the adapter device can approach the non-linear outer surface of the body to be packaged, by tilting of the first strap support section with respect to the spacer section. Preferably, the second strap support section is tilted in an opposite direction with respect to the tilting of the first strap support section.

Within the sense of the invention, the spacer section shall be understood as a section of the adapter device arranged for spacing the first strap support section apart from the second strap support section and arranged for resting against or on a non-linear outer surface of the body to be packaged, at least with one or two sections of its body contact surface. The spacer section may be shaped as a flat bar with an essentially rectangular cross section between its first and second end. A dimension of the essentially rectangular cross section arranged perpendicular to the body contact surface may by less than 1/3 of the width or breadth of the cross section. The spacer section can be preferably reversibly transferred from a non-deformed state to a deformed state. In the non-deformed state, the spacer section can extend along a longitudinal axis Z. The spacer section may act against a force urging the strap support sections towards each other while tensioning the packaging strap. The body contact surface comprises a body contact surface section preferably arranged in the middle between a first end of the spacer section and a second end of the spacer section opposite of the first end.

Within the sense of the invention, the first strap support section is arranged for supporting the packaging strap and for spacing the packaging strap apart from the spacer section, particularly when the body contact surface rests against or on a non-linear outer surface of the body to be packaged. The first strap support section may have an essentially frustoconical or frusto-pyramidal shape. The first strap support section has a strap contact edge arranged for supporting the strap at least in the strap supporting state. The first strap support section may project along a first longitudinal axis A and this axis can be arranged in a plane perpendicular to the longitudinal axis Q of the body to be packaged. Particularly in the initial state, this axis A can form an angle with axis Z preferably in a range from 75° to 90°.

Within the sense of the invention, the second strap support section is arranged for supporting the packaging strap and for spacing the packaging strap apart from the spacer section, particularly when the body contact surface rests against or on a non-linear outer surface of the body to be packaged. The second strap support section may have an essentially frustoconical or frusto-pyramidal shape. The second strap support section has a strap contact edge arranged for supporting the strap at least in the strap supporting state. The second strap support section may project along a second longitudinal axis B and this axis can be arranged in a plane perpendicular to the longitudinal axis Q of the body to be packaged. Particularly in the initial state, this axis B can form an angle with axis Z preferably in a range from 75° to 90°.

Preferred embodiments are explained in the following and these embodiments may be combined advantageously unless stated otherwise.

In an embodiment, the first strap support section and the second strap support section are arranged to space the packaging strap spaced apart from the spacer section, wherein the adapter device adopted its strap supporting state. Alternatively, the packaging strap may touch the spacer section only in the strap supporting state of the adapter device and is spaced apart from the spacer section in the initial state of the adapter device.

In an embodiment, the adapter device is made from a polymer, preferably from polyethylene or polypropylene, and/or is made using an injection moulding process. This embodiment may offer the advantage of improved reproducibility of the production.

In an embodiment, the first and second strap support sections are designed with rounded edges, with a frustoconical shape and/or frusto-pyramidal shape, particularly to reduce the effort for the tooling and/or the manufacturing of the adapter device.

In an embodiment, the spacer section comprises a first subsection with a first cross sectional area and at least one second subsection with a second cross sectional area smaller than the first cross sectional area. The at least one second subsection can be arranged adjacent to the first cross sectional area, adjacent to the first strap support section or adjacent to the second strap support section. The may be a further second subsection between the first subsection and the second strap support section. At least one of the second subsections may act as a hinge. Preferably, at least one of the second subsections is designed as an integral hinge. This embodiment may offer the advantage of a reduced bending resistance to better adapt the adapter device or its body contact surface to the non-linear surface of the body.

In an embodiment, the spacer section comprises several first subsections with the first cross sectional area at least two of which are separated by a second subsection with a second cross sectional area smaller than the first cross sectional area. This embodiment may offer the advantage that the spacer section can approach or follow the body's non-linear outer surface more closely.

In an embodiment, at least one of the first strap support section and/or the second strap support section comprises a recess arranged for guiding the strap. A surface of the recess can be inclined with respect to the longitudinal axis A or B. The recess can accept a section of the strap. Preferably, the recess is arranged adjacent to the strap contact edge of the respective strap support section. This embodiment can offer the advantage that an unwanted relative motion between the strap and the strap support section or a slipping off is counteracted.

In an embodiment, the spacer section, the first strap support section and the second strap support section provide a clearance arranged for accepting at least a section or part of the strapping tool. Preferably, the clearance is essentially box shaped in the initial state or as long as the spacer section is non-deformed. This embodiment may offer the advantage of easier manufacturing of the adapter device. This embodiment may offer the advantage that the tensioning of the packaging strap is simplified.

In an embodiment, the adapter device can be transferred from an initial state comprising a first distance H between the spacer section and a line running from the strap contact edge of the first strap support section to the strap contact edge of the second strap support section, to a strap supporting state comprising a second distance h between the spacer section and the line,

wherein $o \leq h < H$. Preferably, h is greater than the thickness of a component of the strapping tool which needs to be arranged between the spacer section and the packaging strap for tensioning the packaging strap or for closing the loop. This embodiment may offer the advantage that the tensioning of the strap can be simplified of improved.

In an embodiment, the spacer section has the first surface arranged essentially parallel to the body contact surface, and the first strap support section and the second strap support section each have one of the strap contact edges, and the first surface is spaced apart from both strap contact edges with a predetermined distance to provide a clearance for a component of the strapping tool in the initial state and preferably in the strap supporting state. Preferably, the predetermined distance is greater than the dimension of the component measured in a radial direction of the non-linear or curved outer surface. Preferably, the predetermined distance is between 15 and 30 mm. This may offer the advantage of improved tensioning of the strap.

In an embodiment, the spacer section has a first surface arranged essentially parallel to the body contact surface, and at least one of the first strap support section and the second strap support section has one of the strap contact edges, the strap contact edge being spaced apart from the first surface, such that an edge of the strap contact edge arranged for contacting the strap is spaced apart from the first surface in the strap supporting state. In the initial state, the distance H between the first surface of the spacer section and the strap contact edge of each of the strap support sections is preferably:

$$H > (R / \cos\alpha) - R$$

where R indicates the radius of the non-linear or curved outer surface of the body and $\alpha$ indicates the angle of the non-linear or curved outer surface covered by half of the spacer section length L between the first strap support section and the second strap support section. Preferably, the distance H is between 15 and 30 mm. Preferably, the length L is between 100 and 150 mm. This may offer the advantage of improved tensioning of the strap.

In an embodiment, at least one of the first strap support section and the second strap support section comprises a void with an opening for being arranged towards the body's non-linear outer surface. Thus, the respective support section comprises a wall partially limiting the void, instead of being massive, and forming the strap contact edge. This embodiment may offer the advantage of saving raw material, adapter weight and/or energy for production.

In an embodiment, the first strap support section has a friction reducing surface arranged for permitting the packaging strap to slide during tensioning. There may be a coating arranged in the friction reducing surface.

This embodiment may offer the advantage of easier handling when tensioning the strap and closing the loop.

In an embodiment, the second strap support section has a friction reducing surface arranged for permitting the packaging strap to slide during tensioning. There may be a coating arranged in the friction reducing surface. This embodiment may offer the advantage of easier handling when tensioning the strap and closing the loop.

In an embodiment, the body contact surface has at least a section arranged for increasing the friction with the body. The roughness of this section may be increased compared to the strap contact edge. There may be a coating arranged in the section arranged for increasing the friction with the body. This embodiment may offer the advantage of easier handling when tensioning the strap and closing the loop.

In an embodiment, the spacer section is arranged to be curved when the adapter device is transferred to the strap supporting state, particularly to approach the curvature of the body's non-linear or curved outer surface. This embodiment may offer the advantage of an improved or larger area of mechanical contact between the body contact surface and the non-linear surface of the body. This embodiment may offer the advantage of improved tensioning of the strap.

In an embodiment, the first strap supporting section is arranged to be tilted with respect to the spacer section when the adapter device is transferred to the strap supporting state. This embodiment may offer the advantage of an improved or larger area of mechanical contact between the body contact surface and the non-linear surface of the body.

In an embodiment, the second strap supporting section is arranged to be tilted with respect to the spacer section when the adapter device is transferred to the strap supporting state. This embodiment may offer the advantage of an improved or larger area of mechanical contact between the body contact surface and the non-linear surface of the body.

In an embodiment, a first longitudinal axis A through the first strap support section and a body contact surface section form a first angle in the initial state, and the first longitudinal axis A and the body contact surface section form a second angle in the strap supporting state. Preferably, the second angle is smaller than the first angle. Preferably, in the strap supporting state the first longitudinal axis A is tilted with respect to the initial state. In the strap supporting state, the longitudinal axis A is tilted with respect to the axis' direction in the initial state, such that the first strap support section can contact the non-linear outer surface of the body. This embodiment may permit improved tensioning of the strap by keeping the strap spaced apart from the first surface in the strap supporting state, particularly when the spacer section runs essentially parallel to the body's curved surface.

An advantageous first arrangement comprises an adapter device according to the first aspect or according to one of the preferred embodiments and the strap, wherein the strap is supported by the first strap support section and the second strap support section, particularly such that the strap is spaced apart from the spacer section. This arrangement may offer the advantage of improved tensioning of the strap. Preferably, the packaging strap has a width between 10 and 25 mm. This arrangement may also offer the advantage of increased safety of the packaged body.

In an embodiment of the first arrangement, wherein the adapter device adopted the strap supporting state, the first strap support section and the second strap support section keep the strap spaced apart from the spacer section, preferably to provide the clearance for a component of the strapping tool. Preferably, the spacer segment is deformed in the strap supporting state. Preferably, the packaging strap has a width between 10 and 25 mm. This embodiment may offer the advantage of improved tensioning of the strap, of increased safety of the packaged body and/or of simplify removal of the strapping tool's component from the clearance.

An advantageous second arrangement comprises the body with a non-linear outer surface, an adapter device according to the first aspect or according to one of the preferred embodiment, and the packaging strap, wherein

- the body has a longitudinal axis Q,

- the body contact surface rests against or on the non-linear outer surface,

- the spacer section is deformed,

- the first strap supporting section projects along the first longitudinal axis A and axis A is arranged in a plane perpendicular to axis Q,

- the packaging strap rests on the strap contact edge of the first strap supporting section,

- the packaging strap is spaced apart from the spacer section.

Preferably, the second strap supporting section projects along the second longitudinal axis B which is arranged in the plane perpendicular to axis Q, and the packaging strap rests on the strap contact edge of the second strap supporting section.

This arrangement may also offer the advantage of increased safety of the packaged body.

DESCRIPTION OF THE DRAWINGS

Fig. 1 schematically shows an embodiment of the adapter device in its initial state and in its strap supporting state,

Fig. 2 schematically shows further embodiments of the adapter device,

Fig. 3 schematically shows further embodiments of the adapter device in their strap supporting states,

Fig. 4 shows an arrangement comprising an adapter device according to the first aspect or according to one of its embodiments and a strap,

Fig. 5 shows the arrangement of figure after tensioning the strap and after removing the strapping tool.

Fig. 6 shows a further arrangement comprising an embodiment of the adapter device 1 and the strap,

Fig. 7 shows an embodiment of the adapter device in its strap supporting state tied to a body,

Fig. 8 schematically shows a further embodiment of the adapter device in its initial state and in its strap supporting state.

Figure schematically shows an embodiment of the adapter device 1. The adapter device comprises an essentially flat spacer section 2 with a body contact surface 3 arranged for contacting the body with a non-linear outer surface. Further, the adapter device comprises a first strap support section 4 projecting from the body contact surface along a first longitudinal axis A, wherein the first strap support section is arranged at a first end of the spacer section. Also, the adapter device comprises a second strap support section 5 projecting from the body contact surface along a second longitudinal axis B and the second strap support section is arranged at a second end of the spacer section. The adapter device is arranged for being, preferably reversibly, transferred from a initial state, in which the first longitudinal axis A and a body contact surface section 15 form a first angle $\beta0$, to a strap supporting state, in which the first longitudinal axis A and the body contact surface section form a second angle $\beta1$.

The adapter device is made from a polymer and the strap contact edge 6 of the first strap support section 4 is arranged essentially parallel to the first surface 12 of the spacer section 2 and a spaced apart by predetermined distance H from the first surface 12. The second strap support section 5 is designed essentially similar to the first strap support section 4.

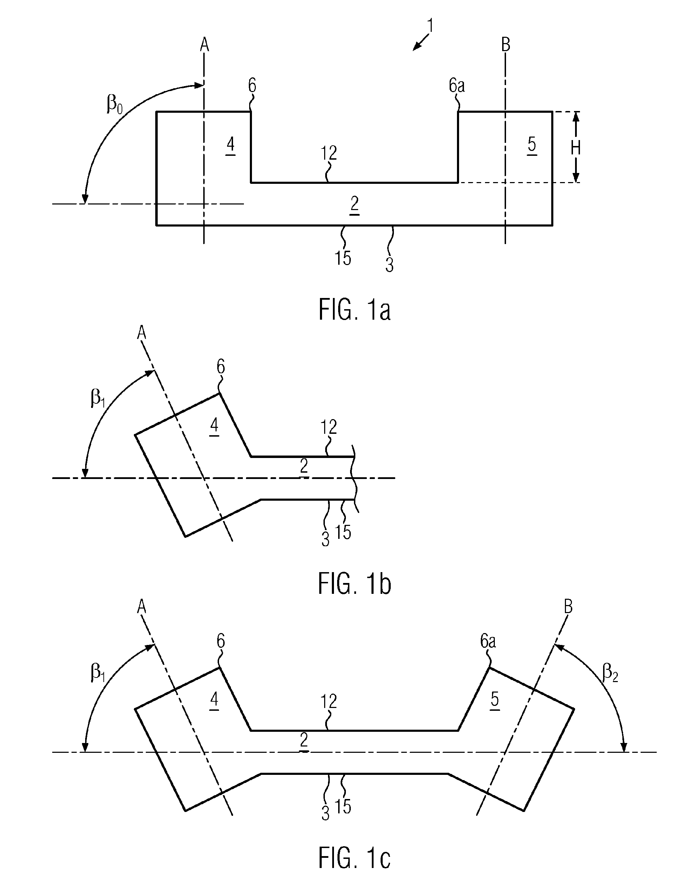

Fig. 1a schematically shows the adapter device 1 in its initial state. The first longitudinal axis A and the body contact surface section 15 form a first angle $\beta0$. This also applies to the second longitudinal axis B.

Fig. 1b schematically shows a part of the adapter device 1 in its strap supporting state, wherein the first strap support section 4 is tilted compared to the initial state. The first longitudinal axis A and the body contact surface section form a second angle β1 which is smaller than the first angle β0.

Fig. 1c schematically shows the adapter device in its strap supporting state, wherein the first strap support section and the second strap support section are each tilted compared to the initial state. The second longitudinal axis B and the body contact surface section 15 form a second angle β2 which is smaller than the first angle β0.

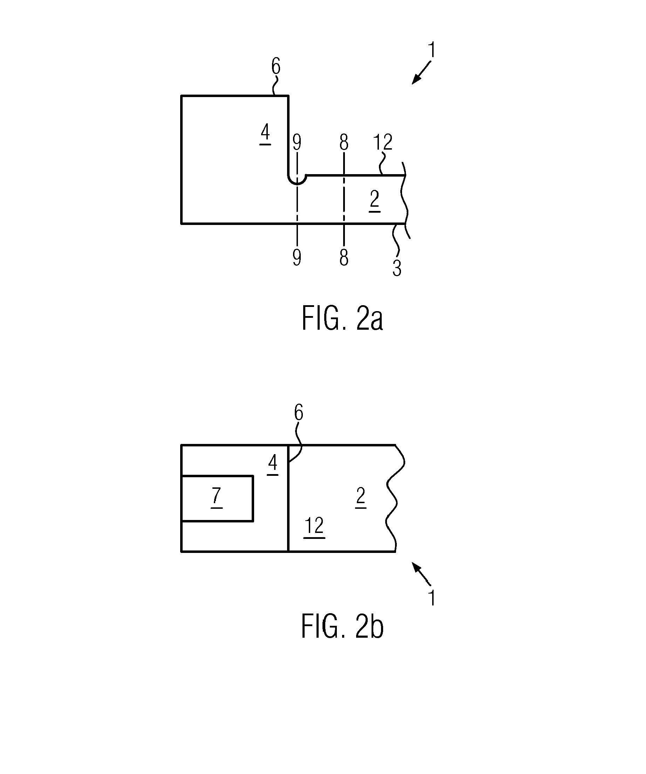

Figure 2a schematically shows a further embodiment of the adapter device 1. The spacer section 2 comprises a first subsection 8 with a first cross sectional area and a second subsection 9 with a second cross sectional area, which is small than the first cross sectional area. The second subsection 9 is arranged between the first subsection 8 and the first strap support section 4. The explanations of the embodiment of figure 1 also apply.

Figure 2b schematically shows a further embodiment of the adapter device 1. The strap contact edge 6 of the first strap support section 4 comprises a recess 7 for guiding the strap, which is not shown. The explanations of the embodiment of figure 1 also apply.

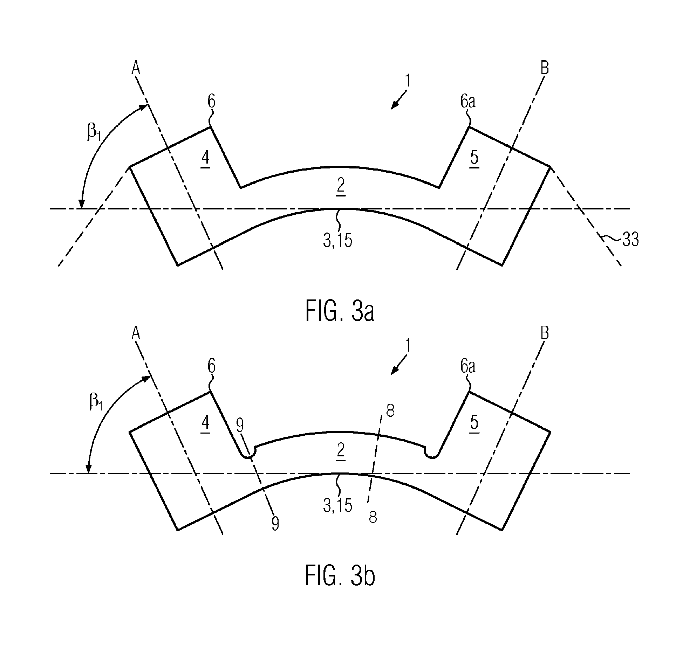

Figure 3 schematically shows further preferred embodiments of the adapter device 1 in their strap supporting states. In the strap supporting state, the first longitudinal axis A through the first strap support section 4 is tilted compared to the initial state. The angle β1 formed by the first longitudinal axis A and the body contact surface section 15 is smaller than in the initial state.

The strap 33 is shown in figure 3a by a dashed line and is supported by the strap contact edges 6, 6a of the first strap support section 4 and the second strap support section 5. In contrast to the embodiment of figures 1, 2 the spacer section 2 is arranged to be curved when the adapter device is transferred to the strap supporting state. To make tilting of the strap support sections 4, 5 easier, the spacer section 2 of the embodiment schematically shown by figure 3b comprises the second subsection 9 one of which is arranged between the first subsection 8 and the first strap support section 4.

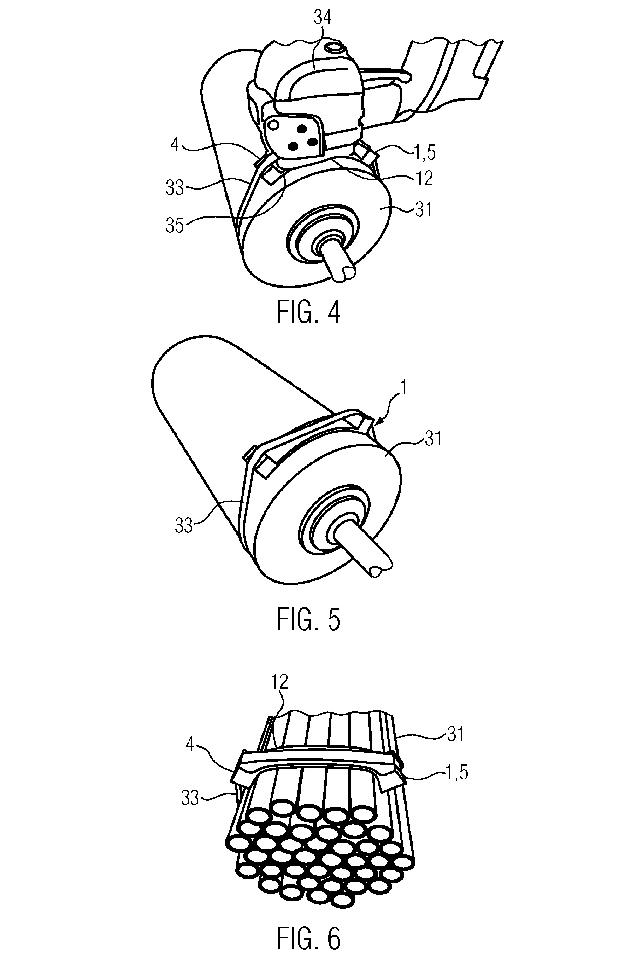

Figure 4 shows an arrangement comprising an adapter device 1 according to the first aspect or according to one of its embodiments and a strap 33. Also, a body 31 with a non-linear outer surface and a strapping tool 34 are shown. One essentially plate shaped component 35 of the strapping tool 34 is fed into a clearance between the first surface 12 of the spacer section 2 and the strap 33. This clearance is achieved by the strap support sections 4, 5 which keep the strap spaced apart from the spacer section.

Figure 5 shows the arrangement of figure 4 after tensioning the strap 33 and after removing the strapping tool 34. The strap was tensioned and a loop surrounding both the body 31 and the adapter device 1 was closed.

Figure 6 shows a further arrangement comprising an embodiment of the adapter device 1 and the strap 33. Also, the body 31 with a non-linear outer surface is shown. In this arrangement, the body comprises a bundle of pipes. The strap 33 was tensioned and two sections of the strap were connected to form a loop surrounding both the body 31 and the adapter device 1. While tensioning the strap and closing the loop, the strap support sections 4, 5 provided a clearance between the strap 33 and the first surface 12 of the spacer section for a component of strapping tool (not shown). Due to the adapter device the tension within the strap is maintained after removal of the strapping tool.

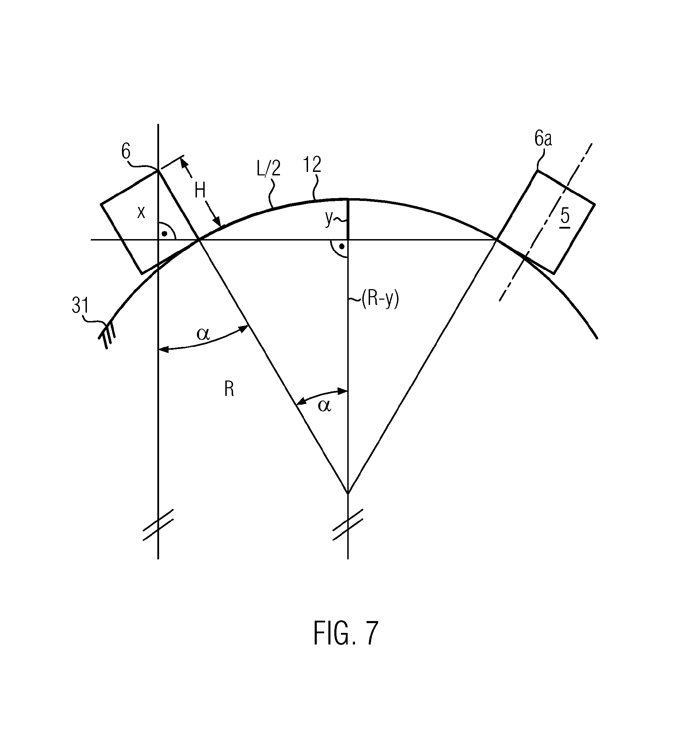

Figure 7 shows an embodiment of the adapter device in its strap supporting state tied to a body 31 with a non-linear outer surface, while the strap itself is not shown. The spacer section is curved following the body's non-linear outer surface which leads to the distance y not available for the insertion of the particularly plate shaped component of a strapping tool. To compensate, the distance H between the first surface 12 of the spacer section and the strap contact edge 6 needs to be chosen to avoid the strap resting on the first surface in the strap supporting state. By choosing the distance H greater than $(R / \cos\alpha) - R$, where R indicates the radius of the non-linear outer surface of the body 31 and $\alpha$ indicates the angle of the non-linear outer surface covered by half of the spacer section length L between the first strap support section and the second strap support section, there will be a clearance for a component of the strapping tool. The desired clearance shall be added to H. Preferably, 15 mm $\leq$ H $\leq$ 30 mm. Preferably, 100 mum $\leq$ L $\leq$ 150 mm.

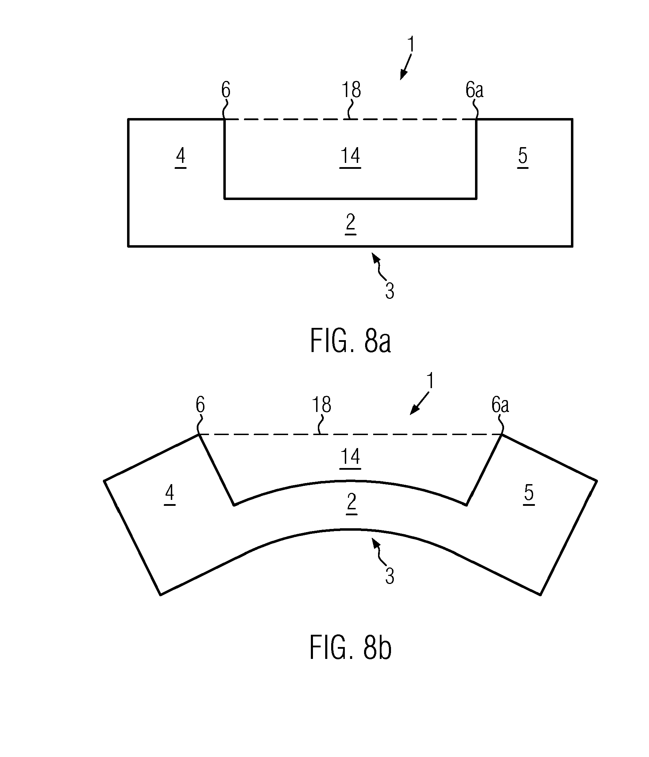

Figure 8 schematically shows a further embodiment of the adapter device in its initial state, shown by Fig. 8a, and in its strap supporting state, shown by Fig. 8b. The adapter device comprises a spacer section 2 with a body contact surface 3 arranged for contacting the body (not shown), a first strap support section 4 connected with a first end of the spacer section and arranged for supporting a packaging strap (not shown), and a second strap support section 5 connected with a second end of the spacer section, and arranged for supporting the packaging strap.

The spacer section, the first strap support section, the second strap support section and a line 18 between a strap supporting end 16 of the first strap support section and a strap supporting end 17 of the second strap support section limit a clearance 14 arranged for accepting at least a section or part of an strapping tool. The adapter device is arranged for being transferred from a initial state to a strap supporting state in which the adapter device is deformed and the line is spaced apart from the spacer section.

In the strap supporting state, the strap can follow line 18.

List of Reference Signs

1     adapter device
2     spacer section

3       body contact surface
4       first strap support section
5       second strap support section
6, 6a   strap contact edge
7       recess
8       first subsection of spacer section
9       second subsection of spacer section
10      void of strap support section
11      opening into the void
12      first surface of spacer section
14      clearance
15      body contact surface section
18      line between the strap contact edges 6, 6a

A       longitudinal axis of first strap support section
B       longitudinal axis of second strap support section
h       distance between the spacer section and line 18 in the strap supporting state
H       distance between the spacer section and line 18 in the initial state
Q       longitudinal axis of the body to be packaged
Z       longitudinal axis of the spacer section in its non-deformed state

31      body with a non-linear or curved outer surface
33      packaging strap
34      strapping tool
35      component of strapping tool

**Claims**

1. Adapter device (1) for packaging a body (31) with a non-linear outer surface, the adapter device comprising
a spacer section (2) with a body contact surface (3) arranged for contacting the body,
a first strap support section (4) connected with a first end of the spacer section and arranged for supporting a packaging strap (33), and
a second strap support section (5) connected with a second end of the spacer section, and arranged for supporting the packaging strap,
wherein the spacer section is deformable such that the body contact surface can adapt to the body's non-linear outer surface.

2. Adapter device (1) according to claim 1, wherein the strap support section comprises a first subsection (8) with a first cross sectional area and a second subsection (9) with a second cross sectional area smaller than the first cross sectional area, wherein preferably the second subsection is arranged between the first subsection and the first strap support section.

3. Adapter device according to one of the preceding claims, wherein the first strap support section has a recess (7) arranged for guiding the packaging strap.

4. Adapter device according to one of the preceding claims, wherein the spacer section, the first strap support section and the second strap support section provide a clearance (14) arranged for accepting at least a section or part of a strapping tool (34).

5. Adapter device according to one of the preceding claims, which can be transferred from an initial state comprising a first distance H between the spacer section and a line (18) running from a strap contact edge (6) of the first strap support section to a strap contact edge (6a) of the second strap support section,
to a strap supporting state comprising a second distance h between the spacer section and the line, wherein o < h < H.

6. Adapter device according to one of the preceding claims, wherein the first strap support section comprises a void (10) with an opening (11) for being arranged towards the body's non-linear outer surface.

7. Adapter device according to one of the preceding claims, wherein the first strap support section has a friction reducing surface and/or the body contact surface has a section arranged for increasing the friction with the body.

8. Adapter device according to one of the preceding claims, wherein the spacer section is arranged to be curved when the adapter device is transferred to the strap supporting state.

9. Adapter device according to one of the preceding claims, wherein the first strap support section is arranged to be tilted with respect to the spacer section, when the adapter device is transferred to the strap supporting state.

10. Arrangement comprising an adapter device according to one on the preceding claims and the packaging strap, wherein the strap is supported by the first strap support section and the second strap support section.

11. Arrangement according to the preceding claim, wherein the adapter device adopted the strap supporting state, wherein the first strap support section and the second strap support section keep the strap spaced apart from the spacer section to provide the clearance for a component of the strapping tool.

FIG. 1a

FIG. 1b

FIG. 1c

FIG. 2a

FIG. 2b

FIG. 3a

FIG. 3b

FIG. 4

FIG. 5

FIG. 6

FIG. 7

FIG. 8a

FIG. 8b

Europäisches
Patentamt

European
Patent Office

Office européen
des brevets

# EUROPEAN SEARCH REPORT

Application Number

EP 15 16 8047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 867 523 A2 (BURNS BROS [US]) 19 December 2007 (2007-12-19) * paragraphs [0007] - [0030] * * figures 1-8 * | 1-3,5-10 | INV. B60P7/08 B65D63/18 F16L3/233 B65D71/04 B66C1/12 |
| X | DE 10 2013 108359 A1 (SPANSET INTER AG [CH]) 5 February 2015 (2015-02-05) * paragraphs [0001] - [0051] * * figures 1-4 * | 1,9,10 | |
| A | DE 10 2010 018651 A1 (SPANSET INTER AG [CH]) 3 November 2011 (2011-11-03) * paragraphs [0001] - [0052] * * figures 1, 2 * | 1-11 | |

TECHNICAL FIELDS
SEARCHED     (IPC)

B60P
B65D
F16L
B66C

The present search report has been drawn up for all claims

| Place of search | Date of completion of the search | Examiner |
|---|---|---|
| Munich | 21 October 2015 | Duc, Emmanuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 16 8047

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2015

| Patent document cited in search report | Publication date | Patent family member(s) | Publication date |
|---|---|---|---|
| EP 1867523 A2 | 19-12-2007 | AT 517783 T<br>EP 1867523 A2<br>US 2007292230 A1 | 15-08-2011<br>19-12-2007<br>20-12-2007 |
| DE 102013108359 A1 | 05-02-2015 | NONE | |
| DE 102010018651 A1 | 03-11-2011 | DE 102010018651 A1<br>WO 2011135015 A1 | 03-11-2011<br>03-11-2011 |

EPO FORM P0459

For more details about this annex : see Official Journal of the European Patent Office, No. 12/82